# FASCICULE DE BREVET EUROPEEN

(11) **EP 2 464 068 B1**
(45) Date de publication et mention de la délivrance du brevet: **19.06.2019**
(21) Numéro de dépôt: 11192660.6
(22) Date de dépôt: 08.12.2011
(51) Int. Cl.: H04L 12/58

(54) **Système de gestion globale de filtrage personnalisé basé sur un circuit d'échange d'informations sécurisé et procédé associé**
System zur globalen Verwaltung der personalisierten Filterung, die auf einem gesicherten Informationsaustauschsystem basiert, und entsprechendes Verfahren
System for overall management of personalised filtering based on a secured information exchange circuit and related method

(30) Priorité: 08.12.2010 FR 1060231
(43) Date de publication de la demande: 13.06.2012
(73) Titulaire: Société Française du Radiotéléphone-SFR, 75008 Paris (FR); Creatick, 06200 Nice (FR)
(72) Inventeur: Teimoorzadeh, Kourosh, 28130 BOUGLAINVAL (FR); Petit, Ludovic, 95160 ERAGNY SUR OISE (FR); Maurel, Georges, 06270 VILLENEUVE LOUBET (FR); Sarti, Laurence, 06510 CARROS (FR)
(74) Mandataire: Ipside

(56) Documents cités:
- WO-A2-2008/001333
- US-A1- 2005 080 855
- US-A1- 2009 282 112
- DAMIANI E ET AL: "P2P-based collaborative spam detection and filtering", PEER-TO-PEER COMPUTING, 2004. PROCEEDINGS. PROCEEDINGS. FOURTH INTERNA TIONAL CONFERENCE ON ZURICH, SWITZERLAND 25-27 AUG. 2004, PISCATAWAY, NJ, USA,IEEE, 25 août 2004 (2004-08-25), pages 176-183, XP010724981, DOI: DOI:10.1109/PTP.2004.1334945 ISBN: 978-0-7695-2156-5
- GUOQING MO ET AL: "Multi-agent Interaction Based Collaborative P2P System for Fighting Spam", INTELLIGENT AGENT TECHNOLOGY, 2006. IAT '06. IEEE/WIC/ACM INTERNA TIONAL CONFERENCE ON, IEEE, PI, 1 décembre 2006 (2006-12-01), pages 428-431, XP031002953, ISBN: 978-0-7695-2748-2

## Description

### DOMAINE TECHNIQUE DE L'INVENTION

L'invention concerne un système de gestion globale de filtrage personnalisé basé sur un circuit d'échange d'informations sécurisé ainsi que le procédé associé. L'invention trouve une application particulièrement avantageuse dans le domaine des télécommunications pour le traitement anti-SPAM chez les opérateurs de téléphonie fixe et/ou mobile, quelle que soit la technologie mise en oeuvre (GSM, UMTS, DSL, Wi-Fi) et les infrastructures associées (service, hébergement, bureautique, etc.).

### ETAT DE LA TECHNIQUE

De nos jours, une grande quantité d'informations transite sur les réseaux d'opérateurs de téléphonie vers les utilisateurs équipés d'un média d'accès, comme par exemple un téléphone portable ou un ordinateur.

Ces informations peuvent notamment prendre la forme de messages de type texte, de vidéos ou de photos ou tout autre contenu numérique. Ces informations peuvent en particulier être échangées librement entre les utilisateurs du réseau, ou contenues dans des messages non sollicités de type SPAM prenant par exemple la forme de messages publicitaires, ou malveillants tels que les messages comportant des codes malveillants/malicieux comme notamment des virus.

Certaines informations sont considérées comme « désirées » par l'utilisateur comme par exemple les informations librement échangées avec des utilisateurs de confiance. Il faut donc autoriser la diffusion de ce type d'informations jusqu'au média d'accès de l'utilisateur destinataire. D'autres informations, comme par exemple les SPAM, sont considérées comme « indésirables » par l'utilisateur. Il faut donc pouvoir assurer un blocage de ces informations afin d'éviter toute pollution du média d'accès de l'utilisateur.

Toutefois, pour d'autres types d'informations, comme celles contenues dans les messages publicitaires, il est difficile de prévoir les informations qui présenteront a priori un intérêt ou non pour l'utilisateur. En effet, les informations « désirées » ou « indésirables » dépendent fortement des préférences personnelles de chaque utilisateur.

Il existe donc un besoin de filtrer l'information sur le réseau, de sorte que seules les informations désirées par les utilisateurs soient diffusées jusqu'à leur média d'accès.

A cet effet, on connaît des systèmes de filtrage, dits systèmes « centralisés », installés au niveau du réseau de l'opérateur qui sont capables de collecter et centraliser les informations pour tous les utilisateurs reliés au réseau. Toutefois, avec de tels systèmes, la décision de bloquer ou d'autoriser la diffusion d'une information est laissée à la libre appréciation de l'opérateur, ce qui a tendance à affecter la confiance des utilisateurs qui n'apprécient pas que les informations dont ils sont destinataires puissent être filtrées à leur insu. En outre, le temps de réponse de ces systèmes à une attaque par envoi massif de messages de type SPAM est relativement important. On remarque aussi que les émetteurs de SPAM utilisent dans certains cas des techniques telles que par exemple des images de liens intégrées aux messages qu'il est très difficile de détecter dans la mesure où la législation relative à la protection de la vie privée dans certains pays n'autorise pas de scanner le contenu des messages des utilisateurs du réseau.

On connaît par ailleurs des systèmes de filtrage installés au niveau du média de l'utilisateur, dits systèmes « locaux », qui permettent de personnaliser le filtrage pour chaque utilisateur du réseau. Toutefois, l'interface de contrôle proposée à l'utilisateur est souvent très complexe à paramétrer. En outre, pour un réseau de téléphonie mobile, un tel système autorise la diffusion de messages de type SPAM sur le réseau d'accès, ce qui est très coûteux pour l'opérateur.

On connaît dans l'état de la technique la demande de brevet américain N° US 2005/0080855, qui décrit un procéder pour créer une liste blanche (« whitelist » en terminologie anglo-saxonne) pour le traitement de courriers électroniques.

On connaît également dans l'état de la technique la demande PCT N° WO 2008/001333, qui décrit un système et un procédé pour la protection contre les messages de type « spam », mettant en oeuvre une carte à puce.

L'invention a notamment pour but de proposer un système de gestion globale permettant de résoudre avantageusement et efficacement les problèmes précités des systèmes de filtrage centralisés ou locaux de l'état de la technique.

### OBJET DE L'INVENTION

A cette fin, l'invention assure le traitement de l'information sur le réseau, en particulier le traitement des messages de type SPAM, via une gestion dynamique et contextuelle de règles de filtrage.

L'invention permet aux utilisateurs d'intervenir de façon directe sur le filtrage des messages au niveau de dispositifs locaux dédiés à l'aiguillage et au filtrage des messages.

De plus l'invention permet également aux utilisateurs d'intervenir de façon indirecte sur le filtrage des messages au niveau de dispositifs centraux dédiés à l'aiguillage et au filtrage global des messages.

L'invention permet également aux utilisateurs d'opter pour une discrimination négative (filtrage de messages non-désirés) et/ou positive (filtrage de messages désirés) des messages.

En outre, l'invention autorise la mise à jour et l'enrichissement de filtres et des mécanismes de filtrage centraux en fonction des préférences locales des utilisateurs concrétisées par des profils de filtrage.

L'invention propose ainsi un système de filtrage personnalisé proactif basé sur les expériences des utilisateurs et la définition anticipée de règles de filtrage.

Plus précisément, le système de filtrage selon l'invention fait intervenir des bases de données individuelles réparties associées chacune à un média d'accès comportant un profil de filtrage dynamique, temporel et contextuel, de chaque utilisateur.

Par « dynamique », on entend un filtrage de l'information qui peut s'adapter en fonction du comportement de l'utilisateur auquel le profil de filtrage est associé mais aussi en fonction du comportement des autres utilisateurs du réseau de l'opérateur.

Par « temporel », on entend un filtrage de l'information qui peut évoluer en fonction du temps, une information pouvant être considérée comme « désirée » par un utilisateur à un certain moment mais « non désirée » à un autre moment.

Par « contextuel », on entend un filtrage de l'information basé sur des préférences utilisateurs définies dans les profils de filtrage et des évènements déclenchés par l'utilisateur comme par exemple une recherche d'information, l'information fournie à l'utilisateur étant fonction de ces deux éléments.

On note que la présente invention est basée sur un circuit de confiance composé par les différents acteurs du système à savoir l'utilisateur, l'opérateur et éventuellement un prestataire de service tiers. Tandis que la notion de « Confiance » est concrétisée techniquement par un cercle d'interactions exclusives permettant le transfert sécurisé (disponibilité, confidentialité, intégrité et traçabilité) des échanges de messages électroniques et des profils de filtrages entre les différents acteurs du circuit de confiance.

Le circuit de confiance ainsi formé est un circuit privé à l'intérieur duquel l'information est partagée entre les différents acteurs et contrôlée de manière individuelle et globale à partir des préférences de chaque utilisateur.

Dans ce circuit de confiance, chacun des acteurs (opérateur, utilisateur, partenaire) peut jouer un rôle passif consistant à utiliser les règles de filtrage définies à travers les profils de filtrage et/ou actif de création de règles de filtrage afin de les proposer aux autres acteurs du système. Ainsi par exemple, un opérateur peut mettre en oeuvre l'invention avec ses collaborateurs et proposer à ses clients une base de connaissances répertoriant des profils de filtrage.

A cet effet, l'invention fait également appel à au moins une base de données, dite base de données de mutualisation, stockant l'ensemble des profils de filtrage des utilisateurs installée dans les infrastructures du réseau de l'opérateur et/ou du réseau tiers. Une interaction entre les différents éléments actifs du système (média d'accès, infrastructures du réseau de l'opérateur et du réseau tiers) est mise en oeuvre pour assurer la gestion des profils de filtrage. En prenant en compte les préférences de filtrage de chaque utilisateur, on élabore des mécanismes de filtrage communautaires qui s'appliquent de manière globale aux utilisateurs du réseau de l'opérateur.

Etant donné que les utilisateurs sont à l'origine des mécanismes de filtrages communautaires établis à partir de leurs profils de filtrage, une information pourra être évaluée et le cas échéant traitée avant même qu'un utilisateur (qui ne l'aura encore jamais rencontrée) ne la reçoive sur son média d'accès. Cela permet notamment d'obtenir l'effet « proactif » du système selon l'invention ainsi que l'aspect « sécurisé » d'échange d'informations recherchés.

Par rapport à l'invention, on remarque dans les systèmes de filtrage de l'état de l'art :
- la présence d'une architecture opérateur centrique uniquement ;
- l'absence de mécanismes de feedback basés sur la prise en compte des préférences des utilisateurs ;
- l'absence de capitalisation des expériences des utilisateurs et du parcours client ;
- l'absence de circuits d'échanges et de partage de filtres et/ou de mécanismes multilatéraux (utilisateurs, opérateur, prestataire(s) de services), ainsi que
- l'absence de mécanismes de gestion de messages préférentiels : en effet, à ce jour, la quasi-totalité des solutions anti-SPAM existantes oeuvre uniquement pour filtrer les messages non désirés.

Ce dernier aspect est important dans la mesure où l'invention propose une solution 2 en 1, c'est-à-dire une solution capable de gérer les SPAM mais aussi la gestion de l'émission et de la réception de messages de type publicitaire (« Advertising » en anglais), ce qui est strictement impossible avec les systèmes de l'état de la technique.

En outre, une sécurisation est réalisée de préférence sur le média de l'utilisateur, sur le serveur hébergeant une base de données de mutualisation, dans la liaison entre le serveur et l'utilisateur par authentification de l'utilisateur, ainsi que dans la liaison entre le serveur et le réseau de l'opérateur.

On note également que comme il existe des mécanismes de filtrage installés au niveau du réseau de l'opérateur, il sera possible d'effectuer un filtrage au moins partiel adapté à chaque utilisateur dans le réseau d'accès de l'opérateur, ce qui permettra de préserver une certaine bande passante pour les réseaux opérateur de type mobile.

L'invention concerne donc un système de gestion globale de filtrage personnalisé d'informations pour le traitement anti-SPAM mis en oeuvre avec un réseau d'un opérateur en relation avec des médias d'accès d'utilisateurs, ce réseau d'opérateur étant interconnecté avec un réseau tiers, caractérisé en ce que le système est formé par :
- un logiciel de filtrage installé sur chaque média d'accès permettant à chaque utilisateur de définir un profil de filtrage dynamique, temporel et contextuel, une base de données, dite base de données individuelle, étant associée à chaque profil de filtrage,
- au moins une base de données, dite base de données de mutualisation, stockant les profils de filtrage des différents utilisateurs, cette base de données représentant la somme des bases de données individuelles réparties, cette base de données de mutualisation étant associée au réseau de l'opérateur et/ou au réseau tiers,
- des échanges de données sécurisés, comportant notamment des mises à jour des profils de filtrage, étant déclenchés en fonction des évènements liés aux profils de filtrage entre les différentes bases de données individuelles et la base de données de mutualisation,
- des mécanismes de filtrage communautaires étant élaborés pour filtrer les informations sur le réseau de l'opérateur à partir de la prise en compte de la somme des bases de données individuelles stockant les profils de filtrage des utilisateurs.

Selon une réalisation, chaque profil de filtrage est formé :
- de filtres définissant l'objet des caractéristiques du filtrage telles que les modalités du mécanisme de filtrage, le contenu, la date, l'émetteur et le récepteur, et
- des mécanismes de filtrage définis par au moins un paramètre, notamment le moment du filtrage, la périodicité du filtrage, le lieu du filtrage à savoir en local sur le média d'accès ou sur le réseau de l'opérateur ou sur le réseau tiers.

Selon une réalisation, un ou plusieurs paramètres des mécanismes de filtrage sont définis par l'utilisateur et/ou l'opérateur et/ou le tiers.

Selon une réalisation, les modalités de filtrage consistent en
- un filtrage positif de l'information correspondant à une utilisation d'un filtre pour rechercher une information désirée ou
- un filtrage négatif de l'information correspondant à une utilisation d'un filtre pour traiter une information reçue non désirée, par exemple par suppression ou mise en quarantaine des informations non désirées.

Selon une réalisation, le filtrage positif de l'information est effectué
- en fonction d'évènements, tels que des recherches, déclenchés par l'utilisateur, et
- de paramètres issus des profils de filtrage traduisant des préférences de l'utilisateur,
- de manière à enrichir l'information fournie à l'utilisateur en fournissant une information correspondant à la fois aux évènements déclenchés et aux préférences de l'utilisateur.

Selon une réalisation, un rapprochement sémantique est effectué entre les paramètres des évènements déclenchés et les paramètres des profils de filtrage traduisant les préférences de l'utilisateur.

Selon une réalisation, les profils de filtrage peuvent être échangés entre les utilisateurs, et/ou entre les utilisateurs et l'opérateur, et/ou entre les utilisateurs et le réseau tiers et/ou entre l'opérateur et le réseau tiers.

Selon une réalisation, la base de données de mutualisation est formée par :
- au moins une première base de données de mutualisation associée à au moins un réseau tiers, cette première base de donnée de mutualisation contenant l'ensemble des profils de filtrage des utilisateurs connectés au réseau tiers, et
- une deuxième base de données de mutualisation associée au réseau de l'opérateur, cette deuxième base de données de mutualisation contenant l'ensemble des profils de filtrage contenus dans la ou les premières bases de données de mutualisation,
- des échanges de données, comportant notamment des mises à jour des profils de filtrage, étant effectués
- entre les bases de données individuelles et la ou les premières bases de données de mutualisation,
- entre la ou les premières bases de données de mutualisation et la deuxième base de données de mutualisation, et
- entre la deuxième base de données de mutualisation et les bases de données individuelles.

Selon une réalisation, l'information est classée dans une catégorie de type « désirée », « indésirable » ou associée à une « recommandation »,
- le traitement d'une information de type « désirée » consistant en une autorisation de la réception de l'information sur le média d'accès,
- le traitement d'une information « indésirable » consistant en une mise en quarantaine de l'information ou une suppression de l'information,
- une « recommandation » consistant en un conseil de classement de l'information dans la catégorie « désirée » ou « indésirable ».

Selon une réalisation, chaque média d'accès comportant une base de données stockant des caractéristiques des informations classées dans une catégorie « désirée », et une base de données stockant les caractéristiques des informations classées dans la catégorie « indésirable », le système comporte :
- des compteurs associés aux bases de données pour mesurer les retours d'expériences relatifs à une information donnée pour l'ensemble des utilisateurs,
- des mécanismes de filtrage communautaires établis à partir de ces retours d'expérience,
- ces mécanismes de filtrage communautaire étant associés à l'émission de recommandations vers les médias des utilisateurs recevant l'information.

Selon une réalisation, les recommandations sont émises par l'opérateur ou le tiers via l'envoi d'un message d'alerte contextuellement ciblé lié notamment à la sécurité nationale, la santé publique, ou à la protection des infrastructures sensibles.

Selon une réalisation, une base de données dite historique assure le stockage du traitement réalisé sur chaque information ainsi que l'information correspondante, de manière à assurer la traçabilité, l'intégrité et la confidentialité de l'ensemble des informations traitées.

Selon une réalisation, le système comporte :
- une interface dédiée pour modifier les profils de filtrage via le média d'accès,
- une interface dédiée pour modifier les profils de filtrage de la première base de données de mutualisation via le réseau tiers,
- une interface dédiée pour modifier les profils de filtrage de la deuxième base de données de mutualisation via le réseau de l'opérateur.

L'invention concerne en outre un procédé de gestion globale de filtrage personnalisé d'informations mis en oeuvre avec un réseau d'un opérateur de téléphonie mobile en relation avec des médias d'accès d'utilisateurs, ce réseau d'opérateur étant interconnecté avec un réseau tiers, caractérisé en ce que :
- un logiciel de filtrage est installé sur chaque média d'accès pour permettre à chaque utilisateur de définir un profil de filtrage, une base de données, dite base de données individuelle, étant associée à chaque profil de filtrage,
- au moins une base de données, dite base de données de mutualisation, stocke les profils de filtrage des différents utilisateurs, cette base de données de mutualisation étant associée au réseau de l'opérateur et/ou au réseau tiers,
- le procédé comporte l'étape, d'échanger des données régulièrement entre les différentes bases de données individuelles et la base de données de mutualisation, les échanges étant déclenchés en fonction des évènements liés aux profils de filtrage, cette étape comportant notamment des mises à jour des profils de filtrage, et d'élaborer des mécanismes de filtrage communautaires pour filtrer les informations sur le réseau de l'opérateur à partir de la prise en compte de la somme des bases de données individuelles stockant les profils de filtrage des utilisateurs.

Selon une mise en oeuvre, chaque média d'accès comporte une base de données stockant des caractéristiques numériques d'informations classées dans une catégorie « désirée », et une base de données stockant les caractéristiques numériques des informations classées dans la catégorie « indésirable », le procédé comportant les étapes suivantes:
- détection d'une information à traiter sur le réseau de l'opérateur et/ou sur le réseau tiers et/ou sur le média d'accès en fonction des profils de filtrage de chaque utilisateur,
- classement de l'information dans une catégorie de type « désirée » ou « indésirable », ce classement consistant en une expérience,
- mesure des retours d'expériences pour l'ensemble des utilisateurs relatifs à l'information traitée à l'aide de compteurs associés aux bases de données,
- élaboration de mécanismes de filtrage communautaires à partir de ces retours d'expérience, et/ou
- émission de recommandations vers les médias des utilisateurs recevant l'information traitée.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique d'un système de filtrage selon l'invention mis en oeuvre sur un réseau d'un opérateur interconnecté avec un réseau tiers ;
Figure 2 : une représentation schématique des bases de données stockant les différents types d'informations et de gestion du filtrage communautaire dans le système de filtrage selon l'invention ;
Figure 3 : une représentation schématique des étapes du procédé de filtrage selon l'invention ;
Figure 4: une représentation schématique des différentes interfaces homme/machine permettant d'interagir avec le système de filtrage selon l'invention.

Les éléments identiques, similaires ou analogues conservent la même référence d'une figure à l'autre.

### DESCRIPTION D'EXEMPLES DE REALISATION DE L'INVENTION

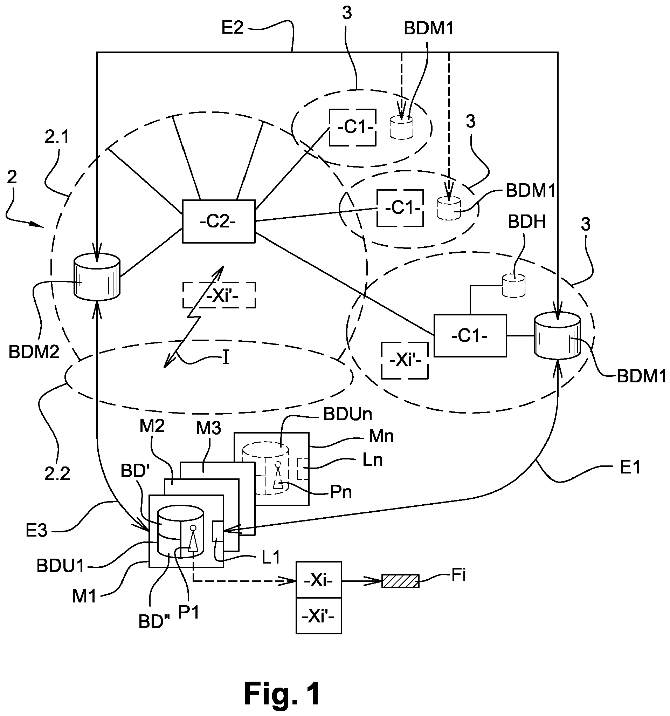

La Figure 1 montre plusieurs médias d'accès M1-Mn appartenant à des utilisateurs en relation avec un réseau 2 d'un opérateur, par exemple un opérateur de téléphonie mobile. Ce réseau 2 est interconnecté avec au moins un réseau tiers 3. Chaque média d'accès M1-Mn pourra prendre par exemple la forme d'un téléphone portable, d'un ordinateur ou de tout autre dispositif susceptible d'établir une communication avec le réseau 2.

S'il s'agit d'un réseau de téléphonie mobile, le réseau 2 comporte de manière classique un réseau coeur 2.1 qui regroupe les équipements assurant le contrôle des appels, le contrôle de la sécurité et la gestion de l'itinérance ; ainsi qu'un réseau d'accès 2.2 fournissant aux médias d'accès les ressources et les mécanismes nécessaires pour avoir accès au réseau coeur. Le réseau 2 présente une infrastructure comportant par exemple au moins un élément parmi : un réseau de transit, une passerelle, un réseau de collecte et des infrastructures de services.

Des informations I transitent sur ces réseaux 2, 3. Ces informations I peuvent notamment prendre la forme de messages de type texte, de vidéos ou de photos ou tout autre contenu numérique. Ces informations I peuvent être échangées librement entre les utilisateurs du réseau, ou contenues dans des messages de type SPAM pouvant être de type publicitaire, ou malveillant. L'invention a pour but de filtrer de manière globale ces informations I tout en respectant les préférences de chaque utilisateur du réseau ainsi que les obligations légales et règlementaires relatives à la vie privée.

A cet effet, un logiciel de filtrage L1-Ln est installé sur chaque média d'accès M1-Mn pour permettre à chaque utilisateur d'avoir accès aux services de filtrage proposés par l'opérateur et/ou le tiers. Les logiciels L1-Ln permettent à chaque utilisateur de définir un profil de filtrage P1-Pn dynamique, temporel et contextuel.

A cette fin, un profil de filtrage P1-Pn est défini par des filtres Fi et des mécanismes Xi de filtrage.

Plus précisément, les filtres Fi définissent l'objet des caractéristiques du filtrage telles que les modalités d'application du filtrage, le contenu, la date, l'émetteur et le récepteur d'une information. Les modalités d'application du filtrage consistent en une utilisation d'un filtre pour rechercher une information désirée (filtrage positif de l'information) ou en une utilisation d'un filtre pour traiter une information reçue non désirée pour ne conserver que l'information désirée, par exemple par suppression ou mise en quarantaine des informations non désirées (filtrage négatif de l'information).

De préférence, le filtrage positif de l'information I est effectué en fonction d'évènements, tels que des recherches, déclenchés par l'utilisateur, et de paramètres issus des profils de filtrage P1-Pn traduisant des préférences de l'utilisateur, de manière à enrichir l'information fournie à l'utilisateur, c'est-à-dire fournir une information correspondant à la fois aux évènements déclenchés et aux préférences de l'utilisateur. Selon une mise en oeuvre, un rapprochement sémantique est effectué entre les paramètres des évènements déclenchés et les paramètres des profils de filtrage traduisant les préférences de l'utilisateur.

Les mécanismes Xi de filtrage sont définis par au moins un paramètre, parmi notamment le moment du filtrage, le contexte général autour de l'utilisateur (endroit où il se trouve, temps extérieur...), la périodicité du filtrage, le lieu du filtrage à savoir en local sur le média d'accès M1-Mn ou sur le réseau 2 de l'opérateur ou sur le réseau tiers 3. Ainsi par exemple une information I relative à la météo pourra être « désirée » par un utilisateur à une certaine période (par exemple le week-end), mais « indésirable » à une autre période. Les paramètres des mécanismes Xi de filtrage sont définis par l'utilisateur et/ou l'opérateur et/ou le tiers. Ces mécanismes Xi de filtrage pourront comporter également des compteurs de type texte ou graphique indiquant des statistiques de filtrage des différents types d'informations I traitées pour chaque utilisateur. Un filtrage s'applique également lors de l'envoi de messages, notamment de type publicitaire, en fonction des filtres et des mécanismes de filtrage définis par l'utilisateur. Des utilisateurs ayant paramétré leur filtre avec des préférences relatives à un domaine donné en fonction d'un contexte donné pourront ainsi autoriser l'envoi et la réception, d'un terminal vers un autre, de messages, en particulier publicitaires, relatifs à ce domaine. Par exemple, des utilisateurs ayant paramétré leur filtre avec des préférences relatives au sport pourront autoriser l'envoi et la réception, d'un terminal vers un autre, de messages publicitaires relatifs à la vente de billets lors d'un évènement sportif. Dans un autre exemple, en fonction du temps extérieur (par exemple si le temps extérieur est pluvieux), un message relatif à un programme de film diffusé dans un cinéma est émis d'un utilisateur vers un autre après une recherche de ce programme effectuée par l'un des utilisateurs ou après réception (par un des terminaux) de ce programme émis par un annonceur. Ces utilisateurs auront paramétré au préalable leurs filtres et leurs mécanismes de filtrage en indiquant des préférences relatives au domaine (le cinéma) et au contexte (temps pluvieux). On se trouve ainsi dans une communauté dans laquelle les utilisateurs peuvent avoir confiance dans les messages envoyés par chacun de ses membres. L'invention s'applique ainsi à la gestion contextuelle des messages sous toutes les formes possibles : mails, message technique, tweet, SMS, MMS et non pas uniquement filtrage des mails.

Une base de données BDU1-BDUn, dite base de données individuelle, est associée à chaque profil de filtrage P1-Pn. Chaque base de données BDU1-BDUn est de préférence stockée dans une mémoire du média d'accès M1-Mn. Toutefois, en variante, ces bases de données BDU1-BDUn pourraient être accessibles sur le réseau 2 ou le réseau tiers 3.

Par ailleurs, au moins une première base de données BDM1, dite base de données de mutualisation, est installée dans l'infrastructure du réseau tiers 3. Cette base de données BDM1 de mutualisation contient les profils de filtrage P1-Pn de l'ensemble des bases de données BDU1-BDUn individuelles réparties sur le réseau. Lorsque plusieurs bases de données de mutualisation BDM1 associées à plusieurs réseaux tiers 3 sont utilisées, chaque base de données BDM1 contient les profils P1-Pn des utilisateurs abonnés aux services du réseau tiers 3 dont les utilisateurs dépendent.

Chaque base de données de mutualisation BDM1 est associée à un module C1 assurant notamment la gestion de cette base de données BDM1. Le module C1 supervise également les échanges E1 de données entre la première base de données BDM1 de mutualisation et les bases de données individuelles BDU1-BDUn, ainsi que les échanges E2 de données entre la première BDM1 et une deuxième BDM2 base de données de mutualisation.

Cette deuxième base de données BDM2 de mutualisation est installée dans l'infrastructure du réseau 2 de l'opérateur. Cette base de données BDM2 contient l'ensemble des profils de filtrage P1-Pn de la ou des premières bases de données BDM1 du ou des réseaux tiers 3. Cette deuxième base de données BDM2 de mutualisation est associée à un module C2 assurant notamment la gestion de cette base de données. Ce module C2 assure également la supervision des échanges E2 de données entre la base de données BDM2 de mutualisation et la ou les premières bases de données BDM1 ; ainsi que les échanges E3 de données entre la base de données BDM2 et les bases de données individuelles BDU1-BDUn.

Une mise à jour des différents profils de filtrage P1-Pn est effectuée dynamiquement entre les bases de données individuelles BDU1-BDUn et les bases de données de mutualisation BDM1 et BDM2, de sorte qu'il sera possible pour ces bases de données de s'enrichir mutuellement.

En particulier, une mise à jour des profils de filtrage P1-Pn nouvellement créés ou modifiés est effectuée entre les bases de données individuelles BDU1-BDUn et la première base de données BDM1 de mutualisation correspondante. Par ailleurs, une mise à jour des profils de filtrage P1-Pn est effectuée entre la base de données BDM1 de mutualisation et la base de données BDM2 de mutualisation. Une mise à jour des profils de filtrage P1-Pn pourra en outre être réalisée entre la deuxième base de données BDM2 de mutualisation et les bases de données individuelles BDU1-BDUn.

L'invention permet ainsi de créer un circuit d'échange d'informations sécurisé entre les bases de données individuelles BDU1-BDUn des utilisateurs, la première base de données BDM1 de mutualisation et la deuxième base de données BDM2 de mutualisation. Ce circuit permet aux profils de filtrage P1-Pn d'être échangés entre les utilisateurs, et/ou entre les utilisateurs et l'opérateur et/ou entre les utilisateurs et le réseau tiers et/ou entre l'opérateur et le réseau tiers. On note que certains profils de filtrage peuvent être créés dans un premier temps au niveau de l'opérateur ou du réseau tiers pour ensuite être transmis à un ou plusieurs utilisateurs qui pourront alors les modifier.

Les échanges de données à l'intérieur du circuit sont déclenchés en fonction des évènements liés aux profils de filtrage P1-Pn, ces évènements pouvant consister notamment en une création d'un nouveau profil de filtrage P1-Pn ou une modification d'un profil de filtrage P1-Pn existant d'un utilisateur par l'utilisateur lui-même ou le cas échant par un des modules C1, C2.

Ainsi, quel que soit le niveau où les modifications des profils de filtrage P1-Pn ont lieu (au niveau du média de l'utilisateur, du réseau 2 de l'opérateur, ou du réseau tiers 3), il est possible de modifier les profils de filtrage P1-Pn dans les autres bases de données du circuit d'échange d'informations selon l'invention.

En outre, des mécanismes Xi' de filtrage communautaires' sont élaborés pour filtrer les informations I sur le réseau de l'opérateur 2 à partir de la prise en compte, dans les bases de données de mutualisation BDM1-BDM2, de la somme des bases de données BDU1-BDUn individuelles réparties stockant les profils de filtrage P1-Pn des utilisateurs. Ces mécanismes Xi' définissent des règles de filtrage applicables de manière globale à l'ensemble des utilisateurs ou au moins à une catégorie d'utilisateurs définie à partir de certains paramètres des profils de filtrage.

De préférence, l'information I est traitée en fonction des profils de filtrage P1-Pn de manière spatiale en classant l'information dans une catégorie « désirée », ou dans la catégorie « indésirable » ou associée à une « recommandation ». Le traitement d'une information Id de type « désirée » consistera en une autorisation de la réception de l'information Id sur le média d'accès M1-Mn de l'utilisateur. Le traitement d'une information Ii de type « indésirable » pourra consister notamment au choix en une mise en quarantaine de l'information Ii, ou une suppression de l'information Ii.

Les recommandations R consistent en un conseil de classement d'une information particulière I dans la catégorie « désirée » ou « indésirable ». Suite à la recommandation R, le classement de l'information I est effectué par l'utilisateur, ce dernier étant libre de suivre ou non cette recommandation. Le profil de filtrage Pi de l'utilisateur pourra alors être modifié, de sorte que lorsqu'une information I du même type que l'information traitée sera reçue, cette information I sera automatiquement classée dans la catégorie d'information (« désirée » ou « indésirable ») correspondante.

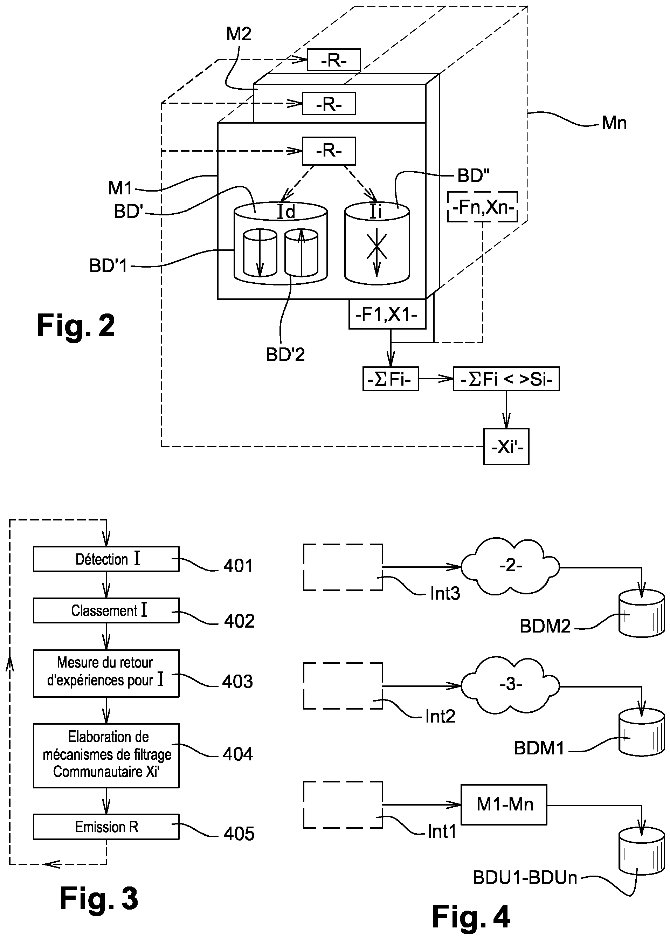

A cet effet, les bases de données BDU1-BDUn individuelles comporte une base de données BD' stockant des caractéristiques des informations Id classées dans la catégorie « désirée » et une base de données BD" stockant les caractéristiques des informations Ii classées dans la catégorie « indésirable » (cf. Figure 2). De préférence, on distingue l'information désirée Id obtenue par filtrage positif stockée dans une base de données BD'1 et l'information désirée Id obtenue par filtrage négatif stockée dans une base de données BD'2.

Dans une réalisation, les mécanismes Xi' de filtrages sont mis en place en fonction des expériences des différents utilisateurs du réseau. Par expérience, on entend le classement d'une information donnée dans la catégorie désirée ou non désirée. Pour élaborer un mécanisme Xi' de filtrage communautaire, on utilise dans un exemple les compteurs des mécanismes Xi de filtrage individuels associés aux bases de données BD', BD". Ces compteurs sont transmis au module de gestion C1 et/ou C2 afin de mesurer les retours d'expériences de l'ensemble des utilisateurs.

En fonction de la comparaison avec des seuils Si paramétrables, les modules C1 et/ou C2 mettent en place des mécanismes Xi' de filtrage communautaires représentatifs d'une tendance des utilisateurs à accepter ou à refuser une information particulière. Les mécanismes Xi' pourront être implémentés au niveau de chaque utilisateur, du réseau 2 de l'opérateur ou du réseau tiers 3. Ces mécanismes Xi' de filtrage communautaire pourront engendrer en outre une émission de recommandations R vers les utilisateurs du réseau et/ou une modification directe des profils de filtrage P1-Pn de chacun des utilisateurs du réseau.

Ainsi par exemple lorsque les retours d'expériences utilisateurs, caractérisant une information I comme étant « indésirable », atteint un seuil Si paramétrable, cette information est dès lors considérée comme potentiellement non désirée par l'ensemble des utilisateurs. Les utilisateurs qui recevront cette information I pourront être alertés par une recommandation R du risque potentiel de celle-ci et/ou cette information I sera supprimée de manière anticipée au niveau du réseau 2 de l'opérateur ou du réseau tiers 3 via un mécanisme de filtrage Xi'.

A l'inverse, lorsque les retours d'expériences utilisateurs, caractérisant une information I comme étant «désirable», atteint un seuil Si paramétrable, cette information est dès lors considérée comme potentiellement intéressante pour l'ensemble des utilisateurs. Les utilisateurs qui recevront cette information I seront alertés par une recommandation R de l'intérêt potentiel que cette information I présente.

Comme montré sur la Figure 3, lors de la mise en oeuvre du procédé selon l'invention, on détecte dans une étape 401 une information I à traiter sur le réseau 2 de l'opérateur et/ou sur le réseau tiers 3 et/ou sur le média d'accès M1-Mn en fonction des profils de filtrage P1-Pn de chaque utilisateur.

Dans une étape 402, les utilisateurs classent l'information I dans une catégorie de type « désirée » ou « indésirable », ce classement consistant en une expérience de l'utilisateur.

Dans une étape 403, on mesure le retour d'expériences pour l'ensemble des utilisateurs relatifs à l'information I traitée à l'aide des compteurs associés aux bases de données BD', BD".

Dans une étape 404, on élabore des mécanismes Xi' de filtrage communautaires à partir de ces retours d'expérience.

Dans une étape 405, les mécanismes Xi' génère en outre de préférence une émission de recommandations R vers les médias M1-Mn des utilisateurs recevant l'information I pour la première fois, et/ou la modification des profils de filtrage P1-Pn de l'ensemble des utilisateurs. Ainsi, avant même de recevoir une information donnée, cette dernière aura été évaluée par la majorité des utilisateurs du réseau de l'opérateur, ce qui permet d'obtenir l'effet « proactif » du système selon l'invention.

Autrement dit, l'invention permet de créer un cercle de confiance dans le traitement de l'information I transitant sur le réseau 2 de l'opérateur, dans la mesure où les mécanismes Xi' de filtrage communautaires applicables à l'ensemble des utilisateurs sont réalisés à partir des filtres Fi mis en place par les utilisateurs du réseau.

Dans une mise en oeuvre particulière du système de filtrage global, des recommandations R sont émises par l'opérateur ou le tiers via l'envoi d'un message d'alerte contextuellement ciblé, par exemple lié à la sécurité nationale, la santé publique, la protection des infrastructures sensibles.

Par ailleurs, on peut envisager que les utilisateurs puissent échanger entre eux certains filtres et mécanismes de filtrages. Des recommandations R pourront également être émises directement par les utilisateurs vers les contacts d'une liste paramétrable accessible par le média d'accès M1-Mn. Les recommandations R pourront également être émises par l'opérateur ou le tiers via l'envoi d'un message d'alerte contextuellement ciblé, par exemple lié à la sécurité nationale, la santé publique, la protection des infrastructures sensibles.

De préférence, le système permettra d'historiser une imputabilité des actes et des différents évènements, c'est-à-dire de stocker dans une base de données dite base de données historique BDH le traitement réalisé par et sur une information I (acceptation, suppression, mise en quarantaine) ainsi que l'information correspondante (en particulier dans le cas d'une suppression). La base de données BDH assure ainsi la traçabilité, l'intégrité et la confidentialité de l'ensemble des informations traitées.

Comme montré sur la Figure 2, la définition des profils de filtrage P1-Pn contenus dans les bases de données individuelles BDU1-BDUn est effectuée de préférence par l'utilisateur via une interface dédiée Int1 du logiciel L1-Ln. L'utilisateur pourra ainsi définir lui-même les différents paramètres des filtres Fi et des mécanismes Xi de filtrage. Pour augmenter l'ergonomie du système, l'interface Int1 fait appel de préférence à un avatar interagissant avec l'utilisateur. En complément ou de manière alternative, le logiciel L1-Ln détermine de manière automatique et contextuelle les différents paramètres des profils de filtrage P1-Pn en fonction du comportement de l'utilisateur, ce qui rend la configuration des profils de filtrage P1-Pn transparente pour l'utilisateur.

En outre, une interface Int2 prenant par exemple la forme d'un site Internet permet d'accéder, via le réseau tiers 3, à la base de données de mutualisation BDM1 contenant les profils de filtrage P1-Pn correspondants. L'utilisateur pourra ainsi également créer, modifier ou supprimer son profil de filtrage P1-Pn via cette interface Int2.

Une interface Int3 prenant par exemple la forme d'un portail dédié permet d'accéder, via le réseau 2 de l'opérateur, à la base de données BDM2 de mutualisation contenant les profils de filtrage P1-Pn associés au réseau 2 de l'opérateur. L'utilisateur pourra donc également créer, modifier ou supprimer son profil de filtrage P1-Pn via cette interface Int3.

Une sécurisation est réalisée de préférence sur le média M1-Mn de l'utilisateur, sur un serveur hébergeant la première base de données BDM1 de mutualisation, dans la relation entre le serveur et l'utilisateur par authentification, ainsi que dans la relation entre le serveur et le réseau 2 de l'opérateur.

En variante, la ou les premières bases de données BDM1 de mutualisation et la deuxième base de données BDM2 de mutualisation sont mutualisées et fusionnées en une seule base de données. La base de données résultante est installée dans les infrastructures du réseau 2 de l'opérateur ou dans les infrastructures du réseau tiers 3.

Ainsi l'utilisateur devient un acteur du système de filtrage selon l'invention en participant à la définition des mécanismes communautaires Xi' appliqués à l'ensemble des informations I transitant sur le réseau 2 de l'opérateur. Par ailleurs, l'opérateur pourra gérer de manière globale la diffusion des informations vers l'ensemble des utilisateurs de son réseau à travers l'interconnexion de son réseau 2 avec une ou plusieurs bases de données de mutualisation installées sur des réseaux tiers. Lorsqu'il s'agit d'un réseau mobile, il sera également possible de préserver la bande passante en mettant en oeuvre au moins partiellement des mécanismes de filtrage au niveau du réseau coeur 2.1.

## Revendications

1. Système de gestion globale de filtrage personnalisé d'informations (I) pour l'échange d'informations sur un réseau (2) d'un opérateur en relation avec des médias d'accès (M1-Mn) d'utilisateurs, ce réseau d'opérateur (2) étant interconnecté avec un réseau tiers (3), ledit système comportant :
- un logiciel de filtrage (L1-Ln) installé sur chaque média d'accès (M1-Mn) permettant à chaque utilisateur de définir un profil de filtrage (P1-Pn) dynamique, temporel et contextuel, des bases de données (BDU1-BDUn) réparties, dites bases de données individuelles, étant de préférence stockées chacune dans un desdits média d'accès (M1-Mn) et associées chacune à un profil de filtrage (P1-Pn) d'un utilisateur,
- au moins une base de données (BDM1, BDM2), dite base de données de mutualisation, stockant les profils de filtrage des différents utilisateurs, cette base de données (BDM1, BDM2) représentant la somme des bases de données (BDU1-BDUn) individuelles réparties, cette base de données (BDM1-BDM2) de mutualisation étant associée à un module (C1-C2) du réseau (2) de l'opérateur et/ou au réseau tiers (3), le module (C1-C2) assurant notamment la gestion de la base de données (BDM1-BDM2),
- des échanges de données, comportant notamment des mises à jour des profils de filtrage (P1-Pn), étant déclenchés en fonction des évènements liés aux profils de filtrage entre les différentes bases de données individuelles (BDU1-BDUn) et la base de données (BDM1, BDM2) de mutualisation,
- des mécanismes (Xi') de filtrage communautaires élaborés pour filtrer les informations (I) sur le réseau de l'opérateur (2) à partir de la prise en compte de la somme des bases de données (BDU1-BDUn) individuelles stockant les profils de filtrage (P1-Pn) des utilisateurs,
**caractérisé en ce que** :
- le filtrage du profil (P1-Pn) défini par chaque utilisateur est dynamique, temporel et contextuel, le filtrage dynamique, temporel et contextuel étant un filtrage de l'information pouvant s'adapter en fonction du comportement de l'utilisateur auquel le profil de filtrage est associé et en fonction du comportement des autres utilisateurs du réseau de l'opérateur, ledit filtrage de l'information pouvant évoluer en fonction du temps, l'information pouvant être considérée comme « désirée » par un utilisateur à un certain moment mais « non désirée » à un autre moment, ledit filtrage de l'information étant basé sur des préférences utilisateurs définies dans les profils de filtrage et des évènements déclenchés par l'utilisateur, l'information fournie à l'utilisateur étant fonction de ces deux éléments,
- chaque profil de filtrage (P1-Pn) est formé de filtres (Fi) définissant l'objet des caractéristiques du filtrage telles que les modalités du mécanisme de filtrage, le contenu, la date, l'émetteur et le récepteur, et de mécanismes (Xi) de filtrage définis par au moins un paramètre, notamment le moment du filtrage, la périodicité du filtrage, le lieu du filtrage à savoir en local sur le média d'accès (M1-Mn) ou sur le réseau (2) de l'opérateur ou sur le réseau tiers (3),
- les modalités de filtrage consistant en :
- un filtrage positif de l'information (I) correspondant à une utilisation d'un filtre pour rechercher une information désirée ou
- un filtrage négatif de l'information (I) correspondant à une utilisation d'un filtre (Fi) pour traiter une information (I) reçue non désirée, par exemple par suppression ou mise en quarantaine des informations non désirées,
et **en ce que** l'information (I) est classée dans une catégorie de type « désirée », « indésirable » ou associée à une « recommandation »,
- le traitement d'une information (Id) de type « désirée » consistant en une autorisation de la réception de l'information sur le média d'accès,
- le traitement d'une information (Ii) « indésirable » consistant en une mise en quarantaine de l'information ou une suppression de l'information,
- une « recommandation » (R) consistant en un conseil de classement de l'information dans la catégorie « désirée » ou « indésirable »,
et **en ce que** chaque média d'accès comporte une base de données (BD') stockant des caractéristiques des informations (Id) classées dans une catégorie « désirée », et une base de données (BD") stockant les caractéristiques des informations (Ii) classées dans la catégorie « indésirable », le système comportant :
- des compteurs associés aux bases de données (BD', BD") pour mesurer les retours d'expériences relatifs à une information (I) donnée pour l'ensemble des utilisateurs,
- des mécanismes (Xi') de filtrage communautaires établis à partir de ces retours d'expérience,
- ces mécanismes (Xi') de filtrage communautaire étant associés à l'émission de recommandations (R) vers les médias (M1-Mn) des utilisateurs recevant l'information (I).

2. Système selon la revendication 1, **caractérisé en ce qu'**un ou plusieurs paramètres des mécanismes de filtrage sont définis par l'utilisateur et/ou l'opérateur et/ou le tiers.

3. Système selon la revendication 1, **caractérisé en ce que** le filtrage positif de l'information est effectué :
- en fonction d'évènements, tels que des recherches, déclenchés par l'utilisateur, et
- de paramètres issus des profils de filtrage (P1-Pn) traduisant des préférences de l'utilisateur,
- de manière à enrichir l'information fournie à l'utilisateur en fournissant une information correspondant à la fois aux événements déclenchés et aux préférences de l'utilisateur.

4. Système selon la revendication 3, **caractérisé en ce que** un rapprochement sémantique est effectué entre les paramètres des évènements déclenchés et les paramètres des profils de filtrage (P1-Pn) traduisant les préférences de l'utilisateur.

5. Système selon l'une des revendications 1 à 4, **caractérisé en ce que** les profils de filtrage (P1-Pn) sont aptes à être échangés entre les utilisateurs, et/ou entre les utilisateurs et l'opérateur, et/ou entre les utilisateurs et le réseau tiers et/ou entre l'opérateur et le réseau tiers.

6. Système selon l'une des revendications 1 à 5, **caractérisé en ce que** la base de données de mutualisation est formée par :
- au moins une première base de données (BDM1) de mutualisation associée à au moins un réseau tiers (3), cette première base de données (BDM1) de mutualisation contenant l'ensemble des profils de filtrage (P1-Pn) des utilisateurs connectés au réseau tiers (3), et
- une deuxième base de données (BDM2) de mutualisation associée au réseau (2) de l'opérateur, cette deuxième base de données (BDM2) de mutualisation contenant l'ensemble des profils de filtrage (P1-Pn) contenus dans la ou les premières bases de données (BDM1) de mutualisation,
- des échanges de données, comportant notamment des mises à jour des profils de filtrage (P1-Pn), étant effectués
- entre les bases de données (BDU1-BDUn) individuelles et la ou les premières bases de données (BDM1) de mutualisation,
- entre la ou les premières bases de donnée (BDM1) de mutualisation et la deuxième base de données (BDM2) de mutualisation, et
- entre la deuxième base de données (BDM2) de mutualisation et les bases de données (BDU1-BDUn) individuelles.

7. Système selon l'une des revendications 1 à 6, **caractérisé en ce que** les recommandations (R) sont émises par l'opérateur ou le tiers via l'envoi d'un message d'alerte contextuellement ciblé lié notamment à la sécurité nationale, la santé publique, ou à la protection des infrastructures sensibles.

8. Système selon l'une des revendications 1 à 7, **caractérisé en ce qu'**une base de données dite historique (BDH) assure le stockage du traitement réalisé sur chaque information ainsi que l'information correspondante, de manière à assurer la traçabilité, l'intégrité et la confidentialité de l'ensemble des informations traitées.

9. Système selon la revendication 6, **caractérisé en ce qu'**il comporte :
- une interface (Int1) dédiée pour modifier les profils de filtrage (P1-Pn) via le média d'accès (M1-Mn),
- une interface (Int2) dédiée pour modifier les profils de filtrage (P1-Pn) de la première base de données de mutualisation (BDM1) via le réseau tiers,
- une interface (Int3) dédiée pour modifier les profils de filtrage (P1-Pn) de la deuxième base de données (BDM2) de mutualisation via le réseau (2) de l'opérateur.

10. Procédé de gestion globale de filtrage personnalisé d'informations (I) mis en oeuvre par un système de gestion globale de filtrage personnalisé d'informations (I) pour l'échange d'informations avec un réseau (2) d'un opérateur de téléphonie mobile en relation avec des médias d'accès d'utilisateurs, ce réseau d'opérateur (2) étant interconnecté avec un réseau tiers (3), ledit système comportant:
- un logiciel de filtrage (L1-Ln) est installé sur chaque média d'accès (M1-Mn) pour permettre à chaque utilisateur de définir un profil de filtrage (P1-Pn), une base de données (BDU1-BDUn), dite base de données individuelle, étant de préférence stockées chacune dans un desdits média d'accès (M1-Mn) et associée à chaque profil de filtrage (P1-Pn),
- au moins une base de données (BDM1, BDM2), dite base de données de mutualisation, stocke les profils de filtrage des différents utilisateurs, cette base de données (BDM1-BDM2) de mutualisation étant associée à un module (C1-C2) du réseau (2) de l'opérateur et/ou au réseau tiers (3), le module (C1-C2) assurant notamment la gestion de la base de données (BDM1-BDM2),
- le procédé comporte l'étape, d'échanger des données régulièrement entre les différentes bases de données individuelles (BDU1-BDUn) et la base de données (BDM1, BDM2) de mutualisation, les échanges étant déclenchés en fonction des évènements liés aux profils de filtrage, cette étape comportant notamment des mises à jour des profils de filtrage (P1-Pn), et d'élaborer des mécanismes de filtrage communautaires pour filtrer les informations sur le réseau de l'opérateur (2) à partir de la prise en compte de la somme des bases de données (BDU1-BDUn) individuelles stockant les "profils de filtrage de utilisateurs,
- chaque profil de filtrage (P1-Pn) est formé de filtres (Fi) définissant l'objet des caractéristiques du filtrage telles que les modalités du mécanisme de filtrage, le contenu, la date, l'émetteur et le récepteur, et de mécanismes (Xi) de filtrage définis par au moins un paramètre, notamment le moment du filtrage, la périodicité du filtrage, le lieu du filtrage à savoir en local sur le média d'accès (M1-Mn) ou sur le réseau (2) de l'opérateur ou sur le réseau tiers (3),
- les modalités de filtrage consistant en :
- un filtrage positif de l'information (I) correspondant à une utilisation d'un filtre pour rechercher une information désirée ou
- un filtrage négatif de l'information (I) correspondant à une utilisation d'un filtre (Fi) pour traiter une information (I) reçue non désirée, par exemple par suppression ou mise en quarantaine des informations non désirées,
l'information (I) étant classée dans une catégorie de type « désirée », « indésirable » ou associée à une « recommandation »,
- le traitement d'une information (Id) de type « désirée » consistant en une autorisation de la réception de l'information sur le média d'accès,
- le traitement d'une information (Ii) « indésirable » consistant en une mise en quarantaine de l'information ou une suppression de l'information,
- une « recommandation » (R) consistant en un conseil de classement de l'information dans la catégorie « désirée » ou « indésirable »,
chaque média d'accès comportant une base de données (BD') stockant des caractéristiques des informations (Id) classées dans une catégorie « désirée », et une base de données (BD") stockant les caractéristiques des informations (Ii) classées dans la catégorie « indésirable », le système comportant :
- des compteurs associés aux bases de données (BD', BD") pour mesurer les retours d'expériences relatifs à une information (I) donnée pour l'ensemble des utilisateurs,
- des mécanismes (Xi') de filtrage communautaires établis à partir de ces retours d'expérience,
- ces mécanismes (Xi') de filtrage communautaire étant associés à l'émission de recommandations (R) vers les médias (M1-Mn) des utilisateurs recevant l'information (I),
ledit procédé étant **caractérisé en ce qu'**il comporte les étapes suivantes :
- détection (401) d'une information (I) à traiter sur le réseau (2) de l'opérateur et/ou sur le réseau tiers (3) et/ou sur le média d'accès (M1-Mn) en fonction des profils de filtrage (P1-Pn) de chaque utilisateur,
- classement (402) de l'information (I) dans une catégorie de type « désirée » ou « indésirable », ce classement consistant en une expérience,
- mesure (403) des retours d'expériences pour l'ensemble des utilisateurs relatifs à l'information (I) traitée à l'aide de compteurs associés aux bases de données (BD', BD"),
- élaboration (404) de mécanismes (Xi') de filtrage communautaires à partir de ces retours d'expérience, et/ou
- émission (405) de recommandations (R) vers les médias des utilisateurs recevant l'information (I) traitée.

## Patentansprüche

1. System zur globalen Verwaltung der personalisierten Filterung von Informationen (I) für den Austausch von Informationen in einem Netz (2) eines Betreibers in Zusammenhang mit Zugriffsmedien (M1-Mn) von Benutzern, wobei dieses Betreibernetz (2) mit einem Drittanbieternetz (3) verbunden ist, wobei das System umfasst:
- eine auf jedem Zugriffsmedium (M1-Mn) installierte Filtersoftware (L1-Ln), die es jedem Benutzer ermöglicht, ein dynamisches, zeitliches und kontextbezogenes Filterprofil (P1-Pn) zu definieren, wobei verteilte Datenbanken (BDU1-BDUn), die als individuelle Datenbanken bezeichnet werden, vorzugsweise jede in einem der Zugriffsmedien (M1-Mn) gespeichert und jede mit einem Filterprofil (P1-Pn) eines Benutzers verknüpft sind,
- mindestens eine als Gemeinschaftsdatenbank bezeichnete Datenbank (BDM1, BDM2), die die Filterprofile der verschiedenen Benutzer speichert, wobei diese Datenbank (BDM1, BDM2) die Summe der verteilten individuellen Datenbanken (BDU1-BDUn) wiederspiegelt, wobei diese Gemeinschaftsdatenbank (BDM1-BDM2) mit einem Modul (C1-C2) des Netzes (2) des Betreibers und/oder mit dem Drittanbieternetz (3) verknüpft ist, wobei das Modul (C1-C2) vor allem die Verwaltung der Datenbank (BDM1-BDM2) sicherstellt,
- wobei Austausche von Daten, die vor allem Aktualisierungen der Filterprofile (P1-Pn) umfassen, zwischen den verschiedenen individuellen Datenbanken (BDU1-BDUn) und der Gemeinschaftsdatenbank (BDM1, BDM2) abhängig von den Ereignissen ausgelöst werden, die mit den Filterprofilen zusammenhängen,
- wobei gemeinschaftliche Filtermechanismen (Xi'), die so ausgearbeitet sind, dass sie die Informationen (I) im Netz des Betreibers (2) auf Grundlage der Berücksichtigung der Summe der individuellen Datenbanken (BDU1-BDUn) filtern, die Filterprofile (P1-Pn) der Benutzer speichern, **dadurch gekennzeichnet, dass**:
- die von jedem Benutzer definierte Filterung des Profils (P1-Pn) dynamisch, zeitlich und kontextbezogen ist, wobei die dynamische, zeitliche und kontextbezogene Filterung eine Filterung der Information ist, die sich abhängig vom Verhalten des Benutzers, mit dem das Filterprofil verknüpft ist, und abhängig vom Verhalten der anderen Benutzer des Netzes des Betreibers anpassen kann, wobei sich die Filterung der Information zeitabhängig weiterentwickeln kann, wobei die Information zu einem gewissen Zeitpunkt von einem Benutzer als "erwünscht", aber zu einem anderen Zeitpunkt "nicht erwünscht" erachtet werden kann, wobei die Filterung der Information auf in den Filterprofilen definierten Benutzerpräferenzen und Ereignissen basiert, die vom Benutzer ausgelöst werden, wobei die Information, die dem Benutzer geliefert wird, von diesen zwei Elementen abhängt,
- jedes Filterprofil (P1-Pn) von Filtern (Fi) gebildet wird, die den Gegenstand der Kennzeichen der Filterung definieren, wie etwa die Modalitäten des Filtermechanismus, den Inhalt, das Datum, den Sender und den Empfänger, und von Filtermechanismen(Xi), die von mindestens einem Parameter definiert werden, vor allem dem Zeitpunkt der Filterung, der Häufigkeit der Filterung, dem Ort der Filterung, das heißt lokal im Zugriffsmedium (M1-Mn) oder im Netz (2) des Betreibers oder im Drittanbieternetz (3),
- wobei die Filtermodalitäten bestehen in:
- einer positiven Filterung der Information (I), die einer Verwendung eines Filters entspricht, um eine gewünschte Information zu suchen, oder
- einer negativen Filterung der Information (I), die einer Verwendung eines Filters (Fi) entspricht, um eine empfangene, nicht erwünschte Information (I) zu verarbeiten, zum Beispiel durch Löschen oder Quarantänisierung der nicht erwünschten Informationen,
und dadurch, dass die Information (I) in eine Kategorie vom Typ "erwünscht", "unerwünscht" oder mit einer "Empfehlung" verknüpft klassiert wird,
- wobei die Verarbeitung einer Information (Id) vom Typ "erwünscht" in einer Autorisierung des Empfangs der Information auf dem Zugriffsmedium besteht,
- wobei die Verarbeitung einer "unerwünschten" Information (Ii) in einer Quarantänisierung der Information oder einem Löschen der Information besteht,
- wobei eine "Empfehlung" (R) in einem Rat zur Klassierung der Information in die Kategorie "erwünscht" oder "unerwünscht" besteht,
und dadurch, dass jedes Zugriffsmedium eine Datenbank (BD') umfasst, die Kennzeichen der in eine Kategorie "erwünscht" klassierten Informationen (Id) speichert, und eine Datenbank (BD"), die die Kennzeichen der in die Kategorie "unerwünscht" klassierten Informationen (Ii) speichert, wobei das System umfasst:
- Zähler, die mit den Datenbanken (BD', BD") verknüpft sind, um die Erfahrungsrückmeldungen bezüglich einer gegebenen Information (I) für die Gesamtheit der Benutzer zu messen,
- gemeinschaftliche Filtermechanismen (Xi'), die auf Grundlage dieser Erfahrungsrückmeldungen festgelegt werden,
- wobei diese Mechanismen (Xi') zur gemeinschaftlichen Filterung mit dem Ausgeben von Empfehlungen (R) an die Medien (M1-Mn) der Benutzer, die die Information (I) empfangen, verknüpft sind.

2. System nach Anspruch 1, **dadurch gekennzeichnet, dass** ein oder mehrere Parameter der Filtermechanismen vom Benutzer und/oder dem Betreiber und/oder dem Drittanbieter definiert werden.

3. System nach Anspruch 1, **dadurch gekennzeichnet, dass** die positive Filterung der Information erfolgt:
- abhängig von Ereignissen, wie etwa Suchen, die vom Benutzer ausgelöst werden, und
- von aus den Filterprofilen (P1-Pn) stammenden Parametern, die Präferenzen des Benutzers zum Ausdruck bringen,
- um die Information, die dem Benutzer geliefert wird, durch Liefern einer Information zu bereichern, die gleichzeitig den ausgelösten Ereignissen und den Präferenzen des Benutzers entspricht.

4. System nach Anspruch 3, **dadurch gekennzeichnet, dass** eine semantische Annäherung zwischen den Parametern der ausgelösten Ereignisse und den Parametern der Filterprofile (P1-Pn), die die Präferenzen des Benutzers zum Ausdruck bringen, erfolgt.

5. System nach einem der Ansprüche 1 bis 4, **dadurch gekennzeichnet, dass** die Filterprofile (P1-Pn) zwischen den Benutzern und/oder zwischen den Benutzern und dem Betreiber und/oder zwischen den Benutzern und dem Drittanbieternetz und/oder zwischen dem Betreiber und dem Drittanbieternetz ausgetauscht werden können.

6. System nach einem der Ansprüche 1 bis 5, **dadurch gekennzeichnet, dass** die Gemeinschaftsdatenbank gebildet wird von:
- mindestens einer ersten Gemeinschaftsdatenbank (BDM1), die mit mindestens einem Drittanbieternetz (3) verknüpft ist, wobei diese erste Gemeinschaftsdatenbank (BDM1) die Gesamtheit der Filterprofile (P1-Pn) der Benutzer enthält, die mit dem Drittanbieternetz (3) verbunden sind, und
- einer zweiten Gemeinschaftsdatenbank (BDM2), die mit dem Netz (2) des Betreibers verknüpft ist, wobei diese zweite Gemeinschaftsdatenbank (BDM2) die Gesamtheit der Filterprofile (P1-Pn) enthält, die in der oder den ersten Gemeinschaftsdatenbanken (BDM1) enthalten sind,
- wobei Austausche von Daten, die vor allem Aktualisierungen der Filterprofile (P1-Pn) umfassen, erfolgen
- zwischen den individuellen Datenbanken (BDU1-BDUn) und der oder den ersten Gemeinschaftsdatenbanken (BDM1),
- zwischen der oder den ersten Gemeinschaftsdatenbanken (BDM1) und der zweiten Gemeinschaftsdatenbank (BDM2), und
- zwischen der zweiten Gemeinschaftsdatenbank (BDM2) und den individuellen Datenbanken (BDU1-BDUn).

7. System nach einem der Ansprüche 1 bis 6, **dadurch gekennzeichnet, dass** die Empfehlungen (R) vom Betreiber oder dem Drittanbieter über die Sendung einer gezielten kontextbezogenen Alarmnachricht ausgegeben werden, die vor allem mit der nationalen Sicherheit, der öffentlichen Gesundheit oder dem Schutz der sensiblen Infrastrukturen zusammenhängt.

8. System nach einem der Ansprüche 1 bis 7, **dadurch gekennzeichnet, dass** eine als historisch bezeichnete Datenbank (BDH) die Speicherung der an jeder Information ausgeführten Verarbeitung sowie der entsprechenden Information sicherstellt, um die Rückverfolgbarkeit, die Integrität und die Vertraulichkeit der Gesamtheit der verarbeiteten Informationen sicherzustellen.

9. System nach Anspruch 6, **dadurch gekennzeichnet, dass** es umfasst:
- eine dedizierte Schnittstelle (Int1), um die Filterprofile (P1-Pn) über das Zugriffsmedium (M1-Mn) zu modifizieren,
- eine dedizierte Schnittstelle (Int2), um die Filterprofile (P1-Pn) der ersten Gemeinschaftsdatenbank (BDM1) über das Drittanbieternetz zu modifizieren,
- eine dedizierte Schnittstelle (Int3), um die Filterprofile (P1-Pn) der zweiten Gemeinschaftsdatenbank (BDM2) über das Netz (2) des Betreibers zu modifizieren.

10. Verfahren zur globalen Verwaltung der personalisierten Filterung von Informationen (I), das von einem System zur globalen Verwaltung der personalisierten Filterung von Informationen (I) für den Austausch von Informationen mit einem Netz (2) eines Mobilfunkbetreibers in Zusammenhang mit Zugriffsmedien von Benutzern umgesetzt wird, wobei dieses Betreibernetz (2) mit einem Drittanbieternetz (3) verbunden ist, wobei das System umfasst:
- eine Filtersoftware (L1-Ln) wird auf jedem Zugriffsmedium (M1-Mn) installiert, um es jedem Benutzer zu ermöglichen, ein Filterprofil (P1-Pn) zu definieren, wobei eine Datenbank (BDU1-BDUn), die als individuelle Datenbank bezeichnet wird, vorzugsweise jede in einem der Zugriffsmedien (M1-Mn) gespeichert sind und mit jedem Filterprofil (P1-Pn) verknüpft ist,
- mindestens eine Datenbank (BDM1, BDM2), die als Gemeinschaftsdatenbank bezeichnet wird, speichert die Filterprofile der verschiedenen Benutzer, wobei diese Gemeinschaftsdatenbank (BDM1-BDM2) mit einem Modul (C1-C2) des Netzes (2) des Betreibers und/oder mit dem Drittanbieternetz (3) verknüpft ist, wobei das Modul (C1-C2) vor allem die Verwaltung der Datenbank (BDM1-BDM2) sicherstellt,
- das Verfahren umfasst den Schritt des regelmäßigen Austauschens von Daten zwischen den verschiedenen individuellen Datenbanken (BDU1-BDUn) und der Gemeinschaftsdatenbank (BDM1, BDM2), wobei die Austausche abhängig von den Ereignissen ausgelöst werden, die mit den Filterprofilen zusammenhängen, wobei dieser Schritt vor allem Aktualisierungen der Filterprofile (P1-Pn) umfassen, und des Ausarbeitens der gemeinschaftlichen Filtermechanismen, um die Informationen im Netz des Betreibers (2) auf Grundlage der Berücksichtigung der Summe der individuellen Datenbanken (BDU1-BDUn), die die Filterprofile von Benutzern speichern, zu filtern,
- jedes Filterprofil (P1-Pn) wird von Filtern (Fi) gebildet, die den Gegenstand der Kennzeichen der Filterung definieren, wie etwa die Modalitäten des Filtermechanismus, den Inhalt, das Datum, den Sender und den Empfänger, und von Filtermechanismen (Xi), die von mindestens einem Parameter definiert werden, vor allem dem Zeitpunkt der Filterung, der Häufigkeit der Filterung, dem Ort der Filterung, das heißt lokal im Zugriffsmedium (M1-Mn) oder im Netz (2) des Betreibers oder im Drittanbieternetz (3),
- wobei die Filtermodalitäten bestehen in:
- einer positiven Filterung der Information (I), die einer Verwendung eines Filters entspricht, um eine gewünschte Information zu suchen, oder
- einer negativen Filterung der Information (I), die einer Verwendung eines Filters (Fi) entspricht, um eine empfangene, nicht erwünschte Information (I) zu verarbeiten, zum Beispiel durch Löschen oder Quarantänisierung der nicht erwünschten Informationen, wobei die Information (I) in eine Kategorie vom Typ "erwünscht", "unerwünscht" oder mit einer "Empfehlung" verknüpft klassiert wird,
- wobei die Verarbeitung einer Information (Id) vom Typ "erwünscht" in einer Autorisierung des Empfangs der Information auf dem Zugriffsmedium besteht,
- wobei die Verarbeitung einer "unerwünschten" Information (Ii) in einer Quarantänisierung der Information oder einem Löschen der Information besteht,
- wobei eine "Empfehlung" (R) in einem Rat zur Klassierung der Information in die Kategorie "erwünscht" oder "unerwünscht" besteht,
wobei jedes Zugriffsmedium eine Datenbank (BD') umfasst, die Kennzeichen der in eine Kategorie "erwünscht" klassierten Informationen (Id) speichert, und eine Datenbank (BD''), die die Kennzeichen der in die Kategorie "unerwünscht" klassierten Informationen (Ii) speichert, wobei das System umfasst:
- Zähler, die mit den Datenbanken (BD', BD") verknüpft sind, um die Erfahrungsrückmeldungen bezüglich einer gegebenen Information (I) für die Gesamtheit der Benutzer zu messen,
- gemeinschaftliche Filtermechanismen (Xi'), die auf Grundlage dieser Erfahrungsrückmeldungen festgelegt werden,
- wobei diese Mechanismen (Xi') zur gemeinschaftlichen Filterung mit dem Ausgeben von Empfehlungen (R) an die Medien (M1-Mn) der Benutzer, die die Information (I) empfangen, verknüpft sind,
wobei das Verfahren **dadurch gekennzeichnet ist, dass** es die folgenden Schritte umfasst:
- Erkennen (401) einer Information (I), die im Netz (2) des Betreibers und/oder im Drittanbieternetz (3) und/oder im Zugriffsmedium (M1-Mn) verarbeitet werden soll, abhängig von den Filterprofilen (P1-Pn) jedes Benutzers,
- Klassieren (402) der Information (I) in eine Kategorie vom Typ "erwünscht" oder "unerwünscht", wobei diese Klassierung in einer Erfahrung besteht,
- Messen (403) der Erfahrungsrückmeldungen für die Gesamtheit der Benutzer bezüglich der verarbeiteten Information (I) mithilfe von Zählern, die mit den Datenbanken (BD', BD") verknüpft sind,
- Ausarbeiten (404) von gemeinschaftlichen Filtermechanismen (Xi') auf Grundlage dieser Erfahrungsrückmeldungen, und/oder
- Ausgeben (405) von Empfehlungen (R) an die Medien der Benutzer, die die verarbeitete Information (I) empfangen.

## Claims

1. System for the global management of personalised filtering of information (I) for exchanging information over a network (2) of an operator in relation with access mediums (M1*Mn) of users, this operator network (2) being interconnected with a third-party network (3), said system comprising:
- a filtering software (L1-Ln) installed on each access medium (Mi-Mn) that allows each user to define a dynamic, temporal and contextual filtering profile (P1-Pn), distributed databases (BDU1-BDUn), referred to as individual databases, being more preferably each stored in one of said access mediums (Mi-Mn) and each associated with a filtering profile (P1-Pn) of a user,
- at least one database (BDM1, BDM2), referred to as mutualisation database, that stores the filtering profiles of different users, this database (BDM1, BDM2) representing the sum of the distributed individual databases (BDU1-BDUn), with this mutualisation database (BDM1-BDM2) being associated with a module (C1-C2) of the network (2) of the operator and/or with a third-party network (3), the module (C1-C2) ensuring in particular the management of the database (BDM1-BDM2),
- data exchanges, comprising in particular updates to filtering profiles (P1-Pn), being triggered according to the events linked to the filtering profiles between the different individual databases (BDU1-BDUn) and the mutualisation database (BDM1, BDM2),
- community filtering mechanisms (Xi') elaborated to filter the information (I) over the network of the operator (2) from the taking account of the sum of the individual databases (BDU1-BDUn) that store the filtering profiles (P1-Pn) of the users,
**characterised in that**:
- the filtering of the profile (P1-Pn) defined by each user is dynamic, temporal and contextual, with the dynamic, temporal and contextual filtering being a filtering of the information that can be adapted according to the behaviour of the user with which the filtering profile is associated and according to the behaviour of the other users of the network of the operator, said filtering of the information able to change with time, with the information able to be considered as "desired" by a user at a certain moment but "undesired" at another moment, said filtering of information being based on user preferences defined in the filtering profiles and events triggered by the user, with the information supplied to the user being according to these two elements,
- each filtering profile (P1-Pn) is formed of filters (Fi) that define the object of the characteristics of the filtering such as the particulars of the filtering mechanism, the content, the date, the emitter and the receiver, and filtering mechanisms (Xi) defined by at least one parameter, in particular the moment of the filtering, the periodicity of the filtering, the location of the filtering namely locally on the access medium (M1-Mn) or over the network (2) of the operator or over the third-party network (3),
- the filtering particulars consist in:
- a positive filtering of the information (I) corresponding to the use of a filter for searching for desired information or
- a negative filtering of the information (I) corresponding to the use of a filter (Fi) for processing undesired information received (I), for example by deleting or quarantining undesired information,
and **in that** the information (I) is classified in a category of the "desired", "undesirable" type or associated with a "recommendation",
- the processing of information (Id) of the "desired" type consisting in an authorisation for the receiving of the information on the access medium,
- the processing of information (Ii) of the "undesirable" type consisting in a quarantining of the information or a deletion of the information,
- a "recommendation" (R) consisting in advice for classifying the information in the "desired" or "undesirable" category,
and **in that** each access medium comprises a database (BD') that stores characteristics of information (Id) classified in a "desired" category, and a database (BD'') that stores the characteristics of the information (Ii) classified in the "undesirable" category, the system comprising:
- counters associated with the databases (BD', BD") in order to measure the feedback concerning a given piece of information (I) for all of the users,
- community filtering mechanisms (Xi') established using this feedback,
- these community filtering mechanisms (Xi') being associated with the emission of recommendations (R) to the mediums (M1-Mn) of the users receiving the information (I).

2. System according to claim 1, **characterised in that** one or several parameters of the filtering mechanisms are defined by the user and/or the operator and/or the third party.

3. System according to claim 1, **characterised in that** the positive filtering of the information is carried out:
- according to events, such as searches, triggered by the user, and
- parameters coming from the filtering profiles (P1-Pn) which translate the preference of the user,
- in such a way as to enrich the information supplied to the user by supplying information that corresponds to both the events triggered and the preference of the user.

4. System according to claim 3, **characterised in that** a semantic rapprochement is carried out between the parameters of the events triggered and the parameters of the filtering profiles (P1-Pn) which translate the preference of the user.

5. System according to one of claims 1 to 4, **characterised in that** the filtering profiles (P1-Pn) are able to be exchanged between the users, and/or between the users and the operator, and/or between the users and the third-party network and/or between the operator and the third-party network.

6. System according to one of claims 1 to 5, **characterised in that** the mutualisation database is formed by:
- at least one first mutualisation database (BDM1) associated with at least one third-party network (3), this first mutualisation database (BDM1) containing all of the filtering profiles (P1-Pn) of the users connected to the third-party network (3), and
- a second mutualisation database (BDM2) associated with the network (2) of the operator, with this second mutualisation database (BDM2) containing all of the filtering profiles (P1-Pn) contained in the first mutualisation database or databases (BDM1),
- data exchanges, comprising in particular updates to filtering profiles (P1-Pn), being carried out
- between the individual databases (BDU1-BDUn) and the first mutualisation database or databases (BDM1),
- between the first mutualisation database or databases (BDM1) and the second mutualisation database (BDM2), and
- between the second mutualisation database (BDM2) and the individual databases (BDU1-BDUn).

7. System according to one of claims 1 to 6, **characterised in that** the recommendations (R) are emitted by the operator or the third party via the sending of a contextually-targeted alert message linked in particular to national security, public health, or the protection of sensitive infrastructures.

8. System according to one of claims 1 to 7, **characterised in that** a database referred to as history (BDH) provides the storage of the processing carried out on each piece of information as well the corresponding information, so as to provide traceability, integrity and confidentiality of all of the information processed.

9. System according to claim 6, **characterised in that** it comprises:
- A dedicated interface (Int1) for modifying filtering profiles (P1-Pn) via the access medium (M1-Mn),
- a dedicated interface (Int2) for modifying the filtering profiles (P1-Pn) of the first mutualisation database (BDM1) via the third-party network,
- a dedicated interface (Int3) for modifying the filtering profiles (P1-Pn) of the second mutualisation database (BDM2) via the network (2) of the operator.

10. Method for the global management of personalised filtering of information (I) implemented by a system for the global management of personalised filtering of information (I) for exchanging information with a network (2) of a mobile telephony operator in relation with access mediums of users, this operator network (2) being interconnected with a third-party network (3), said system comprising:
- a filtering software (L1-Ln) is installed on each access medium (M1-Mn) in order to allow each user to define a filtering profile (P1-Pn), a database (BDU1-BDUn), referred to as individual database, being more preferably each stored in one of said access mediums (M1-Mn) and associated with each filtering profile (P1-Pn),
- at least one database (BDM1, BDM2), referred to as mutualisation database, stores the filtering profiles of the different users, with this mutualisation database (BDM1-BDM2) being associated with a module (C1-C2) of the network (2) of the operator and/or with the third-party network (3), the module (C1-C2) providing in particular the management of the database (BDM1-BDM2),
- the method comprises the step, of exchanging data regularly between the different individual databases (BDU1-BDUn) and the mutualisation database (BDM1, BDM2), with the exchanges being triggered according to the events linked to the filtering profiles, this step comprising in particular updates to filtering profiles (P1-Pn), and to elaborate community filtering mechanisms in order to filter the information over the network of the operator (2) from the taking account of the sum of the individual databases (BDU1-BDUn) that store the filtering profiles of users,
- each filtering profile (P1-Pn) is formed of filters (Fi) that define the object of the characteristics of the filtering such as the particulars of the filtering mechanism, the content, the date, the emitter and the receiver, and filtering mechanisms (Xi) defined by at least one parameter, in particular the moment of the filtering, the periodicity of the filtering, the location of the filtering namely locally on the access medium (M1-Mn) or over the network (2) of the operator or over the third-party network (3),
- the filtering particulars consist in:
- a positive filtering of the information (I) corresponding to the use of a filter for searching for desired information or
- a negative filtering of the information (I) corresponding to the use of a filter (Fi) for processing undesired information received (I), for example by deleting or quarantining undesired information,
with the information (I) being classified in a category of the "desired", "undesirable" type or associated with a "recommendation",
- the processing of information (Id) of the "desired" type consisting in an authorisation for the receiving of the information on the access medium,
- the processing of information (Ii) of the "undesirable" type consisting in a quarantining of the information or a deletion of the information,
- a "recommendation" (R) consisting in advice for classifying the information in the "desired" or "undesirable" category,
each access medium comprising a database (BD') that stores characteristics of information (Id) classified in a "desired" category, and a database (BD'') that stores the characteristics of the information (Ii) classified in the "undesirable" category, the system comprising:
- counters associated with the databases (BD', BD") in order to measure the feedback concerning a given piece of information (I) for all of the users,
- community filtering mechanisms (Xi') established using this feedback,
- these community filtering mechanisms (Xi') being associated with the emission of recommendations (R) to the mediums (M1-Mn) of the users receiving the information (I),
said method being **characterised in that** it comprises the following steps:
- detection (401) of a piece of information (I) to be processed over the network (2) of the operator and/or over the third-party network (3) and/or over the access medium (M1-Mn) according to the filtering profiles (P1-Pn) of each user,
- classification (402) of the information (I) in a category of the "desired" or "undesirable" type, with this classification consisting of an experience,
- measurement (403) of the feedback for all of the users concerning the information (I) processed using counters associated with the databases (BD', BD''),
- elaboration (404) of community filtering mechanisms (Xi') using this feedback, and/or
- emission (405) of recommendations (R) to the mediums of the users receiving the information (I) processed.
